(19) Europäisches Patentamt
European Patent Office
Office européen des brevets

(11) EP 4 471 883 A2

(12) EUROPEAN PATENT APPLICATION

(43) Date of publication:
04.12.2024 Bulletin 2024/49

(21) Application number: 24179060.9

(22) Date of filing: 30.05.2024

(51) International Patent Classification (IPC):
H01M 4/04 (2006.01)    H01M 4/133 (2010.01)
H01M 4/1393 (2010.01)    H01M 4/36 (2006.01)
H01M 4/62 (2006.01)    H01M 10/0525 (2010.01)
H01M 4/587 (2010.01)    H01M 4/02 (2006.01)

(52) Cooperative Patent Classification (CPC):
H01M 4/133; H01M 4/0471; H01M 4/1393;
H01M 4/366; H01M 4/62; H01M 10/0525;
H01M 4/587; H01M 2004/027; Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2023 CN 202310637473

(71) Applicant: Ningde Amperex Technology Ltd.
Ningde City, Fujian 352100 (CN)

(72) Inventors:
• CHEN, Yusheng
  Ningde City, Fujian Province 352100 (CN)
• CAI, Yuxin
  Ningde City, Fujian Province 352100 (CN)
• DONG, Jiali
  Ningde City, Fujian Province 352100 (CN)

(74) Representative: Icosa
83 avenue Denfert-Rochereau
75014 Paris (FR)

(54) **SECONDARY BATTERY AND ELECTRONIC APPARATUS**

(57) A secondary battery according to this application includes a negative electrode. The negative electrode includes a current collector and a negative electrode active material layer disposed on a surface of the current collector. The negative electrode active material layer includes a first negative electrode active material layer and a second negative electrode active material layer. The first negative electrode active material layer is disposed between the current collector and the second negative electrode active material layer. The first negative electrode active material layer includes a first negative electrode active material, and the first negative electrode active material has a maximum rebound rate Ra; and the second negative electrode active material layer includes a second negative electrode active material, and the second negative electrode active material has a maximum rebound rate Rb; where $5\% \leq Ra \leq 13\%$, $10\% \leq Rb \leq 17\%$, and $Ra < Rb$.

EP 4 471 883 A2

## Description

### FIELD

This application relates to the field of energy storage and specifically to a secondary battery and an electronic apparatus.

### BACKGROUND

As the market for secondary batteries continues to expand, the performance requirements for secondary batteries are also increasing, with energy density and fast charging capability as particularly important indicators. Conventional electrode plate designs in existing secondary batteries are typically single-layered, and the active materials used struggle to provide both high energy density and fast charging capability. Usually, to enhance the fast charging capability of secondary batteries, the coating weight needs to be reduced, or to increase the energy density of lithium secondary batteries, the coating weight needs to be increased. However, reducing the coating weight to improve the fast charging capability of secondary batteries leads to significant loss in energy density due to the lesser amount of active material. Similarly, increasing the coating weight to enhance the energy density of secondary batteries results in poor fast charging capability due to the thicker electrode plates which extend the path for active ion transport.

### SUMMARY

In view of the above problems existing in the prior art, this application provides a secondary battery. The secondary battery of this application employs a specific multi-layer electrode plate design, which significantly enhances the fast charging performance while minimizing the impact on the volumetric energy density of the secondary battery, thereby achieving both high energy density and excellent fast charging capability.

A first aspect of this application provides a secondary battery, where the secondary battery includes a negative electrode, the negative electrode includes a current collector and a negative electrode active material layer disposed on a surface of the current collector, the negative electrode active material layer includes a first negative electrode active material layer and a second negative electrode active material layer, the first negative electrode active material layer is disposed between the current collector and the second negative electrode active material layer, the first negative electrode active material layer includes a first negative electrode active material, the first negative electrode active material has a maximum rebound rate $Ra$, the second negative electrode active material layer includes a second negative electrode active material, and the second negative electrode active material has a maximum rebound rate $Rb$, where $5\% \leq Ra \leq 13\%$, $10\% \leq Rb \leq 17\%$, and $Ra < Rb$. For negative electrode active materials such as graphite materials, the maximum rebound rate can reflect compressive resistance of the negative electrode active materials once they are made into electrode plates. A lower maximum rebound rate means smaller rebound after cold pressing of the corresponding electrode plate. This is beneficial for maintaining a high compacted density of the electrode plate, implying denser stacking between particles, and leading to reduced porosity of the electrode plate. Therefore, it is not conducive to the penetration of electrolyte and the diffusion of active ions, thereby affecting the fast charging capability of the secondary battery. A higher maximum rebound rate results in an electrode plate with a rich porous structure, which is beneficial for the penetration of electrolyte and the diffusion of active ions but the compacted density is low, which reduces the volumetric energy density of the secondary battery. The secondary battery of this application adopts a multi-layer active material layer design. In the upper layer (the second negative electrode active material layer), the second negative electrode active material with a higher maximum rebound rate is selected, and in the lower layer (the first negative electrode active material layer), the first negative electrode active material with a lower maximum rebound rate is selected. At the same time, the maximum rebound rates of the upper and lower active materials are controlled within the above ranges, so that the electrode plate not only has a high compacted density but also maintains a high surface porosity, thereby making the secondary battery have both high energy density and excellent fast charging capability.

In some embodiments, $5\% \leq Ra \leq 10\%$, and $10\% \leq Rb \leq 14\%$. In some embodiments, $8\% \leq Ra \leq 10\%$, and $12\% \leq Rb \leq 14\%$. When the maximum rebound rate of the first negative electrode active material is too low, the stacking becomes too dense, which reduces the porosity of the electrode plate, not conducive to the penetration of electrolyte and the diffusion of active ions, thereby affecting the fast charging capability of the secondary battery. When the maximum rebound rate of the second negative electrode active material is too high, although this benefits the enhancement of fast charging capability, this results in an excessively low compacted density, leading to loss in the volumetric energy density of the secondary battery.

In some embodiments, $5\% \leq Ra \leq 10\%$. In some embodiments, $8\% \leq Ra \leq 10\%$.

In some embodiments, $10\% \leq Rb \leq 14\%$. In some embodiments, $12\% \leq Rb \leq 14\%$.

In some embodiments, $0 < Rb - Ra \leq 10\%$. $Rb - Ra$ falling within the above range can further enhance the fast charging performance of the secondary battery while ensuring the volumetric energy density. In some embodiments, $2\% \leq Rb - Ra \leq 6\%$.

In some embodiments, when the first negative electrode active material reaches its maximum rebound rate, its powder compacted density is PDa, where $1.95 \text{ g/cm}^3 \leq PDa \leq 2.20 \text{ g/cm}^3$. In some embodiments, $2.00 \text{ g/cm}^3 \leq PDa \leq 2.20 \text{ g/cm}^3$. When the PDa of the first negative electrode active material is within the above range, the first negative electrode active material meets the design with higher electrode compacted density and can maintain the integrity of the particle structure.

In some embodiments, when the second negative electrode active material reaches its maximum rebound rate, its powder compacted density is PDb, where $1.75 \text{ g/cm}^3 \leq PDb \leq 2.00 \text{ g/cm}^3$. In some embodiments, $1.80 \text{ g/cm}^3 \leq PDb \leq 2.00 \text{ g/cm}^3$. When the PDb of the second negative electrode active material is within the above range, the second negative electrode active material has a higher rebound rate while maintaining a specified compacted density.

In some embodiments, the first negative electrode active material is selected from artificial graphite, and the second negative electrode active material is selected from artificial graphite.

In some embodiments, based on mass of the negative electrode active material layer, the first negative electrode active material layer has a mass percentage of 60% to 80%. In some embodiments, based on the mass of the negative electrode active material layer, the second negative electrode active material layer has a mass percentage of 20% to 40%. When the percentages of the first and second negative electrode active material layers are within the above ranges, the secondary battery achieves both high energy density and excellent electrochemical performance. When the second negative electrode active material layer has a mass percentage greater than 40%, and the first negative electrode active material layer has a mass percentage less than 60%, the secondary battery experiences significant loss in energy density. When the second negative electrode active material layer has a mass percentage less than 20%, and the first negative electrode active material layer has a mass percentage greater than 80%, the fast charging capability of the secondary battery significantly decreases.

In some embodiments, when tested with N-methyl pyrrolidone as a test oil, the first negative electrode active material has an oil absorption value less than or equal to 65 mL/100g, and the second negative electrode active material has an oil absorption value less than or equal to 65 mL/100g. The oil absorption value of the active material reflects the lipophilic property of the particles. If the oil absorption value is too high, more dispersant is needed to evenly disperse the active material particles in the slurry, reducing the proportion of active material in the slurry, thereby affecting the energy density and kinetic performance of the secondary battery.

In some embodiments, an adhesion force between the negative electrode active material layer and the current collector is greater than or equal to 8N/m. If the adhesion force is too low, the electrode plate is prone to powder dropping and delamination during processing and cycling. Therefore, it is specified that the adhesion force is greater than or equal to 8N/m to ensure stable structure of the electrode plate.

In some embodiments, the compacted density of the negative electrode is $1.70 \text{ g/cm}^3$ to $1.85 \text{ g/cm}^3$. Excessively high compacted density of the negative electrode may cause overpressing of the electrode plate, adversely affecting the electrode plate processing and electrical performance. Excessively low compacted density of the negative electrode cannot effectively improve the energy density of the secondary battery.

In some embodiments, the rebound rate of the negative electrode plate at 50% SOC is T, where $15\% \leq T \leq 20\%$.

A second aspect of this application provides an electronic apparatus including the secondary battery according to the first aspect.

The secondary battery of this application employs a multi-layer electrode plate design. The layer close to the current collector uses a negative electrode active material with a lower maximum rebound rate, ensuring higher compacted density of the electrode plate. The upper layer uses a negative electrode active material with a higher maximum rebound rate, ensuring higher porosity of the electrode plate surface, facilitating the infiltration and penetration of the electrolyte, as well as the diffusion of lithium ions. Such design allows the electrode plate to not only have a high compacted density but also maintain a high surface porosity, thereby allowing the secondary battery to achieve both high energy density and excellent fast charging capability.

A third aspect of this application provides a method for preparing a negative electrode. The method of negative electrode includes preparing a first active material and preparing a second active material; where the first active material is obtained by coating natural graphite and/or artificial graphite, followed by two different heat treatments, and the second active material is obtained by coating artificial graphite, followed by one heat treatment.

Specifically, preparation of the first active material: mixing artificial graphite and/or natural graphite with a coating agent to obtain a first mixture, where based on mass of the first mixture, the coating agent has a mass percentage of 1% to 5%; in an inert atmosphere, performing a first heat treatment on the first mixture to obtain a first heat treatment product; and in a mixed gas of $CO_2$ and $N_2$, performing a second heat treatment on the first heat treatment product to obtain the first active material.

Preparation of the second active material: mixing artificial graphite with a coating agent to obtain a second mixture, where based on mass of the second mixture, the coating agent has a mass percentage of 1% to 5%; and in an inert atmosphere, performing a third heat treatment on the second mixture to obtain the second active material.

The first heat treatment is performed at 950°C to 1200°C, and the first heat treatment lasts for 1 h to 5 h; the second heat treatment is performed at 500°C to 900°C, and the second heat treatment lasts for 5 h to 15 h; the third heat treatment is performed at a temperature of 700°C to 1100°C, and the third heat treatment lasts for 4 h to 10 h; and the coating agent is asphalt.

The above first and second active materials are used as the first and second active material layers of the negative electrode, respectively, and the second active material layer is placed on the upper surface of the first active material layer (that is, the surface of the negative electrode away from the current collector in a thickness direction), so that the secondary battery achieves both higher energy density and fast charging capability.

## BRIEF DESCRIPTION OF DRAWINGS

Figure shows rebound rate curves of first and second negative electrode active materials in Example 10 of this application, where 1 represents the first negative electrode active material, and 2 represents the second negative electrode active material.

## DETAILED DESCRIPTION

In the descriptions of this application, "more than" or "less than" is inclusive of the present number unless otherwise specified.

Unless otherwise specified, the terms used in this application have well known meanings commonly understood by persons skilled in the art. Unless otherwise specified, numerical values of parameters mentioned in this application may be measured by using various measurement methods commonly used in the art (for example, they may be tested by using the methods provided in the embodiments of this application).

A list of items connected by the terms "at least one of", "at least one piece of", "at least one kind of", or the like may mean any combination of the listed items. For example, if items A and B are listed, the phrase "at least one of A and B" means only A; only B; or A and B. In another example, if items A, B, and C are listed, the phrase "at least one of A, B, and C" means only A, only B, only C, A and B (excluding C), A and C (excluding B), B and C (excluding A), or all of A, B, and C. The item A may contain one or more constituents. The item B may contain one or more constituents. The item C may contain a single constituent or a plurality of constituents.

The following clearly and completely describes the technical solutions in some embodiments of this application with reference to the accompanying drawings in some embodiments of this application. Apparently, the described embodiments are only some rather than all of the embodiments of this application. In absence of conflicts, the following embodiments and features in these embodiments may be combined.

I. Secondary battery

A secondary battery according to this application includes a negative electrode, the negative electrode includes a current collector and a negative electrode active material layer disposed on a surface of the current collector, the negative electrode active material layer includes a first negative electrode active material layer and a second negative electrode active material layer, the first negative electrode active material layer is disposed between the current collector and the second negative electrode active material layer, the first negative electrode active material layer includes a first negative electrode active material, the first negative electrode active material has a maximum rebound rate Ra, the second negative electrode active material layer includes a second negative electrode active material, and the second negative electrode active material has a maximum rebound rate Rb, where $5\% \leq Ra \leq 13\%$, $10\% \leq Rb \leq 17\%$, and Ra < Rb. For negative electrode active materials such as graphite materials, the maximum rebound rate can reflect compressive resistance of the negative electrode active materials once they are made into electrode plates. A lower maximum rebound rate means smaller rebound after cold pressing of the corresponding electrode plate. This is beneficial for maintaining a high compacted density of the electrode plate, implying denser stacking between particles, and leading to reduced porosity of the electrode plate. Therefore, it is not conducive to the penetration of electrolyte and the diffusion of active ions, thereby affecting the fast charging capability of the secondary battery. A higher maximum rebound rate results in an electrode plate with a rich porous structure, which is beneficial for the penetration of electrolyte and the diffusion of active ions but the compacted density is low, which reduces the volumetric energy density of the secondary battery. The secondary battery of this application adopts a multi-layer active material layer design. In the upper layer (the second negative electrode active material layer), the second negative electrode active material with a higher maximum rebound rate is selected, and in the lower layer (the first negative electrode active material layer), the first negative electrode active material with a lower maximum rebound rate is selected. At the same time, the maximum rebound rates of the upper and lower active materials are controlled within the above ranges, so that the electrode plate not only has a high compacted density but also maintains a high surface porosity, thereby making the secondary battery have both high energy density and excellent fast charging capability.

In this application, the maximum rebound rate of the active material represents the maximum degree of material rebound of the active material following pressurization and depressurization under different pressure conditions. For the specific test method, refer to the test method in the detailed embodiments below.

In some embodiments, Ra is 5%, 5.5%, 6%, 6.5%, 7%, 7.5%, 8%, 8.5%, 9%, 9.5%, 10%, 10.5%, 11%, 11.5%, 12%, 12.5%, or 13%, or in a range defined by any two of these values. When the maximum rebound rate of the first negative electrode active material is too low, the stacking is too dense. This reduces the porosity of the electrode plate, not conducive to the penetration of electrolyte and the diffusion of active ions, thereby affecting the fast charging capability of the secondary battery. In some embodiments, $5\% \leq Ra \leq 10\%$. In some embodiments, $8\% \leq Ra \leq 10\%$.

In some embodiments, Rb is 10%, 10.5%, 11%, 11.5%, 12%, 12.5%, 13%, 13.5%, 14%, 14.5%, 15%, 15.5%, 16%, 16.5%, or 17%, or in a range defined by any two of these values. When the maximum rebound rate of the second negative electrode active material is too high, although this benefits the enhancement of fast charging capability, this results in an excessively low compacted density, leading to loss in the volumetric energy density of the secondary battery. In some embodiments, $10\% \leq Rb \leq 14\%$. In some embodiments, $12\% \leq Rb \leq 14\%$.

In some embodiments, $5\% \leq Ra \leq 10\%$, and $10\% \leq Rb \leq 14\%$. In some embodiments, $8\% \leq Ra \leq 10\%$, and $12\% \leq Rb \leq 14\%$.

In some embodiments, $0 < Rb - Ra \leq 10\%$. In some embodiments, Rb - Ra is 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, or 10%, or in a range defined by any two of these values. Rb - Ra falling within the above range can further improve the fast charging performance of the secondary battery while ensuring the volumetric energy density. In some embodiments, $2\% \leq Rb - Ra \leq 6\%$.

In some embodiments, when the first negative electrode active material reaches its maximum rebound rate, its powder compacted density is PDa, where $1.95 \ g/cm^3 \leq PDa \leq 2.20 \ g/cm^3$. In some embodiments, PDa is $1.95 \ g/cm^3$, $1.96 \ g/cm^3$, $1.98 \ g/cm^3$, $2.00 \ g/cm^3$, $2.01 \ g/cm^3$, $2.02 \ g/cm^3$, $2.03 \ g/cm^3$, $2.04 \ g/cm^3$, $2.05 \ g/cm^3$, $2.06 \ g/cm^3$, $2.07 \ g/cm^3$, $2.08 \ g/cm^3$, $2.09 \ g/cm^3$, $2.10 \ g/cm^3$, $2.11 \ g/cm^3$, $2.12 \ g/cm^3$, $2.13 \ g/cm^3$, $2.14 \ g/cm^3$, $2.15 \ g/cm^3$, $2.16 \ g/cm^3$, $2.17 \ g/cm^3$, $2.18 \ g/cm^3$, $2.19 \ g/cm^3$, or $2.20 \ g/cm^3$, or in a range defined by any two of these values. When the PDa of the first negative electrode active material is within the above range, the first negative electrode active material meets the design with higher electrode compacted density and can maintain the integrity of the particle structure. In some embodiments, $2.00 \ g/cm^3 \leq PDa \leq 2.20 \ g/cm^3$.

In some embodiments, when the second negative electrode active material reaches its maximum rebound rate, its powder compacted density is PDb, where $1.75 \ g/cm^3 \leq PDb \leq 2.00 \ g/cm^3$. In some embodiments, PDb is $1.75 \ g/cm^3$, $1.77 \ g/cm^3$, $1.79 \ g/cm^3$, $1.80 \ g/cm^3$, $1.81 \ g/cm^3$, $1.82 \ g/cm^3$, $1.83 \ g/cm^3$, $1.84 \ g/cm^3$, $1.85 \ g/cm^3$, $1.86 \ g/cm^3$, $1.87 \ g/cm^3$, $1.88 \ g/cm^3$, $1.89 \ g/cm^3$, $1.90 \ g/cm^3$, $1.91 \ g/cm^3$, $1.92 \ g/cm^3$, $1.93 \ g/cm^3$, $1.94 \ g/cm^3$, $1.95 \ g/cm^3$, $1.96 \ g/cm^3$, $1.97 \ g/cm^3$, $1.98 \ g/cm^3$, $1.99 \ g/cm^3$, or $2.00 \ g/cm^3$, or in a range defined by any two of these values. When the PDb of the second negative electrode active material is within the above range, the second negative electrode active material has a higher rebound rate while maintaining a specified compacted density. In some embodiments, $1.80 \ g/cm^3 \leq PDb \leq 2.00 \ g/cm^3$.

In this application, the powder compacted density when the active material reaches its maximum rebound rate is the limit compacted density of the material. When pressure is further applied, the particle structure of the active material is damaged, and the particles transition from elastic deformation to inelastic deformation, decreasing the rebound rate. For the specific test method, refer to the test method in the detailed embodiments below.

In some embodiments, the first negative electrode active material is selected from artificial graphite and/or natural graphite. In some embodiments, the second negative electrode active material is selected from artificial graphite.

In some embodiments, the first negative electrode active material is selected from artificial graphite. In some embodiments, the second negative electrode active material is selected from artificial graphite.

In some embodiments, the method for preparing the first negative electrode active material includes the following steps.

S1: Mix artificial graphite and/or natural graphite with a coating agent to obtain a first mixture.

S2: Perform a first heat treatment on the first mixture in an inert atmosphere to obtain a first heat treatment product.

S3: Perform a second heat treatment on the first heat treatment product in a mixed gas of $CO_2$ and $N_2$ to obtain the first negative electrode active material.

In some embodiments, in S 1, based on mass of the first mixture, the coating agent has a mass percentage of 1% to 5%, for example, 2%, 3%, or 4%. In some implementations, the coating agent is asphalt.

In some embodiments, in S2, the first heat treatment is performed at 950°C to 1200°C, for example, 1000°C, 1050°C, 1100°C, or 1150°C. In some embodiments, in S2, the first heat treatment lasts for 1 h to 5 h, for example, 2 h, 3 h, or 4 h.

In some embodiments, in S3, the second heat treatment is performed at 500°C to 900°C, for example, 550°C, 600°C, 650°C, 700°C, 750°C, 800°C, or 850°C. In some embodiments, in S3, the second heat treatment lasts for 5 h to 15 h, for example, 6 h, 7 h, 8 h, 9 h, 10 h, 11 h, 12 h, 13 h, or 14 h.

In some embodiments, in the mixed gas of $CO_2$ and $N_2$, $CO_2$ has a volume percentage of 3% to 7%, for example, 4%, 5%, or 6%.

In some embodiments, the method for preparing the second negative electrode active material includes the following steps.

M1: Mix artificial graphite with a coating agent to obtain a second mixture.

M2: Perform a third heat treatment on the second mixture in an inert atmosphere to obtain the second negative electrode active material.

In some embodiments, in M1, based on mass of the second mixture, the coating agent has a mass percentage of 1% to 5%, for example, 2%, 3%, or 4%. In some implementations, the coating agent is asphalt.

In some embodiments, in M2, the third heat treatment is performed at 700°C to 1100°C, for example, 750°C, 800°C, 850°C, 900°C, 950°C, 1000°C, or 1050°C. In some embodiments, in M2, the third heat treatment lasts for 4 h to 10 h, for example, 5 h, 6 h, 7 h, 8 h, or 9 h.

In some embodiments, artificial graphite is obtained from carbonaceous materials such as needle coke, petroleum coke, asphalt coke, and the like through high-temperature graphitization. In some embodiments, natural graphite is obtained from natural flake graphite through acid pickling and ball milling. In some embodiments, based on mass of the negative electrode active material layer, the first negative electrode active material layer has a mass percentage of 60% to 90%, for example, 60%, 65%, 70%, 75%, 80%, 85%, or 90%. In some embodiments, based on the mass of the negative electrode active material layer, the second negative electrode active material layer has a mass percentage of 10% to 40%, for example, 10%, 15%, 20%, 25%, 30%, 35%, or 40%. When the percentages of the first and second negative electrode active material layers are within the above ranges, the secondary battery achieves both high energy density and excellent electrochemical performance. When the second negative electrode active material layer has a mass percentage greater than 40%, and the first negative electrode active material layer has a mass percentage less than 60%, the secondary battery experiences significant loss in energy density. When the second negative electrode active material layer has a mass percentage less than 10%, and the first negative electrode active material layer has a mass percentage greater than 90%, the fast charging capability of the secondary battery significantly decreases.

In some embodiments, when tested with N-methyl pyrrolidone as a test oil, the first negative electrode active material has an oil absorption value less than or equal to 65 mL/100g, and the second negative electrode active material has an oil absorption value less than or equal to 65 mL/100g. The oil absorption value of the active material reflects the lipophilic property of the particles. If the oil absorption value is too high, more dispersant is needed to evenly disperse the active material particles in the slurry, reducing the proportion of active material in the slurry, thereby affecting the energy density and kinetic performance of the secondary battery.

In some embodiments, an adhesion force between the negative electrode active material layer and the current collector is greater than or equal to 8N/m. If the adhesion force is too low, the electrode plate is prone to powder dropping and delamination during processing and cycling. Therefore, it is specified that the adhesion force is greater than or equal to 8N/m to ensure stable structure of the electrode plate.

In some embodiments, the compacted density of the negative electrode is 1.70 g/cm³ to 1.85 g/cm³. In some embodiments, the compacted density of the negative electrode is 1.70 g/cm³, 1.73 g/cm³, 1.75 g/cm³, 1.77 g/cm³, 1.80 g/cm³, 1.83 g/cm³, or 1.85 g/cm³, or in a range defined by any two of these values. Excessively high compacted density of the negative electrode may cause overpressing of the electrode plate, adversely affecting the electrode processing and electrical performance. Excessively low compacted density of the negative electrode cannot effectively improve the energy density of the secondary battery.

In some embodiments, the rebound rate of the negative electrode plate is T, where $15\% \leq T \leq 20\%$, for example, 16%, 17%, 18%, or 19%.

In some embodiments, the negative electrode active material layer further includes a binder and a conductive agent. In some embodiments, the binder includes at least one of styrene-butadiene rubber, polyacrylic acid, polyacrylate, polyimide, polyamide-imide, polyvinylidene fluoride, polyvinylidene difluoride, polytetrafluoroethylene, water-based acrylic resin, polyvinyl alcohol formaldehyde, or styrene-acrylic copolymer. In some embodiments, any conductive material that does not cause chemical changes can be used as the conductive material. In some embodiments, the conductive material includes at least one of conductive carbon black, acetylene black, carbon nanotubes, Ketjen black, conductive graphite, or graphene.

In some embodiments, the negative electrode current collector may be copper foil, nickel foil, stainless steel foil, titanium foil, nickel foam, copper foam, a polymer substrate coated with a conductive metal, or a combination thereof.

In some embodiments, the secondary battery further includes a positive electrode. The positive electrode includes a positive electrode current collector and a positive electrode active material layer.

In some embodiments, the positive electrode active material layer includes a positive electrode active material, a binder, and a conductive agent. In some embodiments, the positive electrode active material may include at least one of lithium cobalt oxide, lithium nickel manganese cobalt oxide, lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, or lithium titanate. In some embodiments, the binder may include various adhesive polymers, such as at least one of polyvinylidene fluoride, polytetrafluoroethylene, polyolefins, sodium carboxymethyl cellulose, lithium carboxymethyl cellulose, modified polyvinylidene fluoride, modified SBR rubber, or polyurethane. In some embodiments, any conductive material that does not cause chemical changes can be used as the conductive agent. Examples of the conductive agent include: a carbon-based material such as natural graphite, artificial graphite, carbon black, acetylene black, Ketjen black, and carbon fiber; a metal-based material such as metal powder or metal fiber including copper, nickel, aluminum, silver, or the like; a conductive polymer such as a polyphenylene derivative; or a mixture thereof.

In some embodiments, the positive electrode current collector may be a metal foil or a composite current collector. For example, an aluminum foil may be used. The composite current collector may be formed by forming a metal material (copper, copper alloy, nickel, nickel alloy, titanium, titanium alloy, silver, silver alloy, or the like) on a polymer matrix.

The secondary battery in this application further includes a separator. A material or shape of the separator used in the secondary battery according to this application is not particularly limited, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is non-woven fabric, a membrane, or a composite membrane having a porous structure, and a material of the substrate layer is at least one selected from polyethylene, polypropylene, polyethylene terephthalate, or polyimide. Specifically, a polypropylene porous membrane, a polyethylene porous membrane, polypropylene non-woven fabric, polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic layer, or may be a layer formed by mixing a polymer and an inorganic substance. The inorganic substance layer includes inorganic particles and a binder. The inorganic particles are at least one selected from aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is at least one selected from polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer includes a polymer, and a material of the polymer is at least one selected from polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

The secondary battery in this application further includes an electrolyte. The electrolyte that can be used in this application may be an electrolyte known in the prior art.

In some embodiments of this application, the electrolyte includes an organic solvent, a lithium salt, and an optional additive. The organic solvent of the electrolyte according to this application may be any organic solvent known in the prior art which can be used as a solvent of the electrolyte. An electrolytic salt used in the electrolyte according to this application is not limited, and may be any electrolytic salt known in the prior art. The additive of the electrolyte according to this application may be any additive known in the prior art which can be used as an additive of the electrolyte. In some embodiments, the organic solvent includes but is not limited to ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, at least one of 1,3-dioxolane (DOL) or dimethoxyethane (DME). In some embodiments, the lithium salt includes at least one of an organic lithium salt or an inorganic lithium salt. In some embodiments, the lithium salt includes but is not limited to lithium hexafluorophosphate ($LiPF_6$), lithium tetrafluoroborate ($LiBF_4$), lithium difluorophosphate ($LiPO_2F_2$), lithium bistrifluor-omethanesulfonimide $LiN(CF_3SO_2)_2$ (LiTFSI), lithium bis(fluorosulfonyl)imide $Fi(N(SO_2F)_2)$ (LiFSI), lithium bis(oxalate) borate $FiB(C_2O_4)_2$ (LiBOB), or lithium difluoro(oxalato)borate $FiBF_2(C_2O_4)$ (LiDFOB). In some embodiments, the additive includes at least one of fluoroethylene carbonate or adiponitrile.

In some embodiments, the secondary battery is a wound secondary battery or a laminated secondary battery.

According to some embodiments of this application, the secondary battery of this application includes but is not limited to a lithium-ion battery or a sodium-ion battery. In some embodiments, the secondary battery includes a lithium-ion secondary battery.

II. Electronic apparatus

This application further provides an electronic apparatus including the secondary battery according to the first aspect of this application.

The electronic device or apparatus in this application is not particularly limited. In some embodiments, the electronic device of this application includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

In the following examples and comparative examples, all reagents, materials, and instruments used are commercially available unless otherwise specified.

Examples and comparative examples

The following describes some embodiments of this application more specifically by using examples and comparative examples. Various tests and evaluations are performed in the following methods. In addition, unless otherwise specified, "part" and "%" are based on mass.

Example 1

Preparation of negative electrode active material

Preparation of graphite material

First negative electrode active material: 5 kg of artificial graphite material was weighed, and mixed to uniformity with asphalt as a coating agent to obtain a first mixture, where a mass ratio of asphalt to graphite material was 3:97. The first mixture underwent a first heat treatment, where conditions for the first heat treatment were as follows: the reaction lasted for 2h at 1000°C under a nitrogen atmosphere. After the reaction ended and the resulting product was cooled to room temperature, a first heat treatment product was obtained. The first heat treatment product underwent a second heat treatment, where conditions for the second heat treatment were as follows: the reaction atmosphere was a mixed gas of 5% $CO_2$ and 95% $N_2$, and the reaction lasted for 6h at 900°C. After the reaction ended and the resulting product was cooled to room temperature, a first negative electrode active material was obtained.

Second negative electrode active material: 5 kg of artificial graphite material was weighed, and mixed to uniformity with asphalt as a coating agent to obtain a second mixture, where a mass ratio of asphalt to graphite material was 4:96. The second mixture underwent a third heat treatment, where conditions for the third heat treatment were as follows: the reaction temperature T2 was 700°C and the reaction time H2 under a nitrogen atmosphere was 4 h. After the reaction ended and the resulting product was cooled to room temperature, a second negative electrode active material was obtained.

The reaction temperature T1 and reaction time H1 in the mixture atmosphere of 5% $CO_2$ and 95% $N_2$ for preparing the first negative electrode active material, and the reaction temperature T2 and reaction time H2 for preparing the second negative electrode active material in Example 1 were adjusted to prepare other examples and comparative examples.

2. Preparation of negative electrode

The first negative electrode active material, sodium carboxymethyl cellulose (CMC), and styrene-butadiene rubber (SBR) were dispersed uniformly in an appropriate amount of deionized water at a mass ratio of 97.5:1.2:1.3 to obtain slurry 1. The second negative electrode active material, sodium carboxymethyl cellulose (CMC), and styrene-butadiene rubber (SBR) were dispersed uniformly in an appropriate amount of deionized water at a mass ratio of 97.5:1.2:1.3 to obtain slurry 2. Copper foil was used as a current collector, with slurry 1 as a first negative electrode active material layer and slurry 2 as a second negative electrode active material layer uniformly applied on the current collector. After coating, drying, and cold pressing, a negative electrode plate, also known as a negative electrode, was obtained. Based on a total mass of the first and second negative electrode active material layers, the first negative electrode active material layer had a mass percentage of 70%, and the second negative electrode active material layer had a mass percentage of 30%.

3. Preparation of positive electrode

Lithium cobalt oxide (chemical formula: $LiCoO_2$) was used as an active material of a positive electrode and was mixed with a conductive agent acetylene black and a binder polyvinylidene fluoride (abbreviated as PVDF) at a weight ratio of 96.3:2.2:1.5 in an appropriate amount of N-methyl pyrrolidone (abbreviated as NMP) solvent until fully stirred and mixed, to form a uniform positive electrode slurry. The slurry was applied onto a current collector Al foil, and after coating, drying, and cold pressing, a positive electrode plate, also known as a positive electrode, was obtained.

4. Preparation of electrolyte

In a dry argon atmosphere glove box, ethylene carbonate (EC), propylene carbonate (PC), ethyl methyl carbonate (EMC), and diethyl carbonate (DEC) were mixed at a mass ratio of EC:PC:EMC:DEC = 1:3:3:3. Then, fluoroethylene carbonate and 1,3-propanesultone were added, dissolved, and stirred thoroughly. Subsequently, a lithium salt $LiPF_6$ was added, and mixed to uniformity to obtain an electrolyte. $LiPF_6$ had a mass percentage of 12.5%, fluoroethylene carbonate had a mass percentage of 2%, and 1,3-propanesultone had a mass percentage of 2%, with the mass percentages of all substances calculated based on mass of the electrolyte.

5. Preparation of separator

A polyethylene porous polymer film was used as a separator.

6. Preparation of lithium-ion battery

The positive electrode, the separator, and the negative electrode were stacked in order, so that the separator was placed between the positive electrode and the negative electrode for separation. Then the stack was wound to obtain an electrode assembly. After welded with tabs, the electrode assembly was then placed in an outer packaging aluminum foil film. Then the prepared electrolyte was injected into the dried electrode assembly, followed by processes such as vacuum packaging, standing, formation, shaping, and capacity testing, to obtain a pouch lithium-ion battery.

Examples 2 to 13 and Comparative Examples 1 to 9

Preparation of negative electrode active material

The differences lied in adjusting the reaction temperature T1 and reaction time H1 to prepare the corresponding first negative electrode active material, and adjusting the reaction temperature T2 and reaction time H2 to prepare the corresponding second negative electrode active material. Specific preparation parameters are shown in Table 1. The preparation of the negative electrode, positive electrode, separator, electrolyte, and lithium-ion battery was the same as that in Example 1.

Examples 14 to 20

Preparation of negative electrode active material

The preparation of the negative electrode active material was the same as that in Example 9.
The preparation of the negative electrode was similar to that in Example 9, with the differences lying in that the mass percentages of the first and second negative electrode active material layers were adjusted by adjusting the coating weight of the slurry. The specific adjusted mass percentages of the first and second negative electrode active material layers are shown in Table 2.
The preparation of the positive electrode, separator, electrolyte, and lithium-ion battery was the same as that in Example 9.

Test Methods

Test of negative electrode active material parameters

A fully discharged lithium-ion battery was taken apart, and the negative electrode was removed and soaked in DMC (dimethyl carbonate) for 20 min, and then sequentially rinsed with DMC and acetone to remove the electrolyte and surface SEI film. Afterwards, the battery was placed in an oven and baked at 80°C for 12 h to obtain the treated negative electrode plate.
A scraper was used to scrape off M1 grams of powder from the negative electrode plate within a thickness range of 10 μm from the surface, and the scraped powder was calcined at 500°C in an air atmosphere for 3 h to obtain the first negative electrode active material.

A scraper was used to scrape off M2 grams of powder from the negative electrode plate within a thickness range of 10 μm from the current collector, and the scraped powder was calcined at 500°C in an air atmosphere for 3 h to obtain the second negative electrode active material.

The obtained first and second negative electrode active materials were tested as follows:

1. Rebound rate and powder compacted density at maximum rebound rate

A PRCD3100 powder compacted density meter was used to test the rebound rate and powder compacted density at the maximum rebound rate of the active material, that is, the limit compacted density.

Specifically, m grams of the active material was placed into a special mold for powder pressing, with the filling thickness approximately 1/3 of the mold depth. Pressure points were set at 5MPa, 25MPa, 45MPa, 65MPa, 85MPa, 105MPa, 125MPa, and 130MPa, then pressure was gradually applied, and the thickness h1 of the active material at each set pressure point was recorded. The powder compacted density in this compressed state could be calculated using the mass m of the active material, thickness h1, and fixed filling area s, which was the compacted density at that pressure point. After the pressure was released, the thickness h2 of the active material after rebound was recorded, and the corresponding decompression density could be calculated.

Powder rebound rate = (compacted density under pressure/decompression density - 1) × 100%.

A graph of powder rebound rate and decompression density yielded a powder rebound rate curve of the material, where the decompression density at the maximum rebound rate was the limit compacted density of the active material.

2. Test of oil absorption value

A DABS-H oil absorption meter was used to determine the oil absorption value of the active material. Specifically, N-methyl pyrrolidone was added to the sample in the mixing tank of the oil absorption meter with a constant speed burette. As the oil absorption of the sample increased, the viscosity of the mixture continuously increased. When the viscosity reached a predetermined value, the oil absorption meter and burette simultaneously shut off. The volume of oil added was directly read from the burette, and the volume of oil absorbed per unit mass of the sample was recorded as the oil absorption value of the sample.

3. Rebound rate of electrode plate

The thickness of the negative electrode plate after cold pressing was measured as T1, the thickness of the negative electrode plate from a 50% SOC cell was measured as T2, and the rebound rate of the 50% SOC negative electrode plate was T = (T2 - T1)/T1*100%.

Testing of related lithium-ion battery performance

4. Volumetric energy density

The lithium-ion battery underwent capacity testing according to the following procedure:

(1) The battery was left standing at 25°C for 30 min.
(2) The battery was charged at 0.5C to 4.48 V, and then to 0.05C at the constant voltage.
(3) The battery was left standing for 5 min.
(4) The battery was discharge at 0.2C to 3.0 V.
(5) The battery was left standing for 5 min, and the testing ended.

The discharge capacity recorded in step (4) was C, the discharge platform voltage was P, the thickness of the lithium-ion battery was measured as G, the length of the lithium-ion battery as L, and the width of the lithium-ion battery as W, and then the volumetric energy density E of the lithium-ion battery could be calculated according to the following formula:

$$E = (C \times P)/(G \times L \times W)$$

5. Test of fast charging performance

(1) The lithium-ion battery was left standing at 25°C for 10 min.
(2) The battery was discharged at 0.025C to 3.0V.
(3) The battery was left standing for 10 min.
(4) The battery was charged at 3C to 4.48 V, and then to 0.025C at the constant voltage.
(5) The battery was left standing for 10 min.
(6) The battery was discharged at 0.025C to 3.0 V.
(7) The battery was left standing for 10 min.
(8) Steps (5) to (8) were repeated for 10 cycles.

The discharge capacity of the last cycle was recorded as D10, the charge capacity of the first cycle was recorded as C1, and the irreversible Li loss rate Q was represented as $Q = (C1 - D10)/C1 \times 100\%$.

Smaller Q means less irreversible Li loss, indicating better fast charging capability of the lithium-ion battery.

Test Results

Table 1 shows the impact of the maximum rebound rate Ra of the first negative electrode active material and the maximum rebound rate Rb of the second negative electrode active material on the performance of the lithium-ion battery.

Table 1

| Example and comparative example | Preparation parameters | | | | Negative electrode | | | | Lithium-ion battery | |
|---|---|---|---|---|---|---|---|---|---|---|
| | H1 (h) | H2 (h) | Reaction temperature of first negative electrode active material T1 (°C) | Reaction temperature of second negative electrode active material T2 (°C) | Maximum rebound rate Ra of first negative electrode active material | Maximum rebound rate Rb of second negative electrode active material | Rb - Ra | Rebound rate T at 50% SOC of negative electrode | Volumetric energy density (Wh/L) | Irreversible Li loss rate Q |
| Example 1 | 6 | 4 | 900 | 700 | 5% | 17% | 12% | 19% | 748 | 1.20% |
| Example 2 | 6 | 4 | 850 | 750 | 6% | 16% | 10% | 17% | 749 | 1.30% |
| Example 3 | 6 | 4 | 800 | 800 | 7% | 15% | 8% | 16% | 750 | 1.30% |
| Example 4 | 6 | 4 | 750 | 850 | 8% | 14% | 6% | 16% | 751 | 1.40% |
| Example 5 | 6 | 4 | 700 | 900 | 9% | 13% | 4% | 15% | 753 | 1.40% |
| Example 6 | 6 | 4 | 650 | 950 | 10% | 12% | 2% | 15% | 752 | 1.50% |
| Example 7 | 5.5 | 3.5 | 700 | 900 | 10% | 15% | 5% | 17% | 749 | 1.20% |
| Example 8 | 6.5 | 3 | 700 | 900 | 8% | 17% | 9% | 19% | 747 | 0.90% |
| Example 9 | 7.5 | 5 | 700 | 900 | 7% | 12% | 5% | 16% | 752 | 1.60% |
| Example 10 | 8 | 6.5 | 700 | 900 | 6% | 10% | 4% | 15% | 754 | 1.70% |
| Example 11 | 9 | 5.5 | 700 | 900 | 5% | 11% | 6% | 15% | 755 | 1.80% |
| Example 12 | 9.5 | 6 | 700 | 900 | 5% | 10% | 5% | 14% | 756 | 1.85% |
| Example 13 | 6 | 3.5 | 500 | 900 | 13% | 15% | 3% | 20% | 746 | 1.10% |
| Comparative Example 1 | 6 | 4 | 950 | 1050 | 4% | 10% | 6% | 15% | 753 | 2.70% |
| Comparative Example 2 | / | 4 | / | 950 | 14% | 12% | -2% | 21% | 737 | 1.20% |
| Comparative Example 3 | 6 | 4 | 600 | 1150 | 11% | 8% | -3% | 16% | 751 | 3.80% |
| Comparative Example 4 | 6 | / | 650 | / | 10% | 18% | 8% | 21% | 740 | 0.90% |
| Comparative Example 5 | 6 | 4 | 950 | 1150 | 4% | 8% | 4% | 14% | 755 | 4.30% |

(continued)

| Example and comparative example | H1 (h) | H2 (h) | Reaction temperature of first negative electrode active material T1 (°C) | Reaction temperature of second negative electrode active material T2 (°C) | Maximum rebound rate Ra of first negative electrode active material | Maximum rebound rate Rb of second negative electrode active material | Rb - Ra | Rebound rate T at 50% SOC of negative electrode | Volumetric energy density (Wh/L) | Irreversible Li loss rate Q |
|---|---|---|---|---|---|---|---|---|---|---|
| | | Preparation parameters | | | | Negative electrode | | | | Lithium-ion battery |
| Comparative Example 6 | / | / | / | / | 14% | 18% | 4% | 22% | 734 | 0.70% |
| Comparative Example 7 | 6 | 4 | 600 | 1000 | 11% | 11% | 0% | 19% | 749 | 1.80% |
| Comparative Example 8 | 6 | 4 | 550 | 1050 | 12% | 10% | -2% | 19% | 748 | 1.90% |
| Comparative Example 9 | 6 | 4 | 500 | 1100 | 13% | 9% | -4% | 20% | 747 | 1.80% |
| Note: "/" indicates that the corresponding heat treatment was not performed. | | | | | | | | | | |

From Examples 1 to 13 in Table 1, it can be seen that when Ra satisfies $5\% \leq Ra \leq 13\%$ and Rb satisfies $10\% \leq Rb \leq 17\%$, the lithium-ion battery maintains a lower level of irreversible Li loss rate while having high energy density, indicating that the battery can achieve both high energy density and good fast charging capability.

From Comparative Examples 2 and 6, it can be seen that when Ra is greater than 13%, although the lithium-ion battery has excellent fast charging capability, the electrode plate rebound rate is large, resulting in significant loss in energy density. From Comparative Examples 1 and 5, it can be seen that when Ra is less than 5%, although the electrode plate rebound rate is small, and the lithium-ion battery has high energy density, the fast charging capability is significantly affected.

From Comparative Examples 4 and 6, it can be seen that when Rb is greater than 17%, the electrode plate rebound rate is large, the lithium-ion battery has excellent fast charging capability, but experiences significant loss in energy density. From Comparative Examples 3 and 5, it can be seen that when Rb is less than 9%, although the electrode plate rebound rate is small, and the lithium-ion battery has high energy density, the fast charging capability is significantly affected.

From Comparative Examples 7 to 9, it can be seen that when Ra is greater than or equal to Rb, both the energy density and fast charging capability of the lithium-ion battery are affected to some extent.

Table 2 further describes, based on Example 9, the impact of the mass percentage Wa of the first negative electrode active material layer and the mass percentage Wb of the second negative electrode active material layer on the performance of the lithium-ion battery.

**Table 2**

| Example | Negative electrode | | | Lithium-ion battery | |
|---|---|---|---|---|---|
| | Wa | Wb | Rebound rate T at 50% SOC of negative electrode | Volumetric energy density E (Wh/L) | Irreversible Li loss rate Q |
| Example 9 | 70% | 30% | 16% | 752 | 1.20% |
| Example 14 | 55% | 45% | 18% | 745 | 1.20% |
| Example 15 | 60% | 40% | 17% | 750 | 1.40% |
| Example 16 | 65% | 35% | 17% | 751 | 1.50% |
| Example 17 | 75% | 25% | 16% | 753 | 1.70% |
| Example 18 | 80% | 20% | 16% | 754 | 1.80% |
| Example 19 | 85% | 15% | 15% | 755 | 1.90% |
| Example 20 | 90% | 10% | 15% | 756 | 2.00% |

From the data in Table 2, it can be seen that when the mass percentage Wa of the first negative electrode active material layer is 60% to 80%, and the mass percentage Wb of the second negative electrode active material layer is 20% to 40%, the lithium-ion battery has both high energy density and excellent fast charging performance.

Although some example embodiments of this application have been illustrated and described, this application is not limited to the disclosed embodiments. On the contrary, persons of ordinary skill in the art will recognize that some modifications and changes can be made to some embodiments without departing from the spirit and scope of this application described in the appended claims.

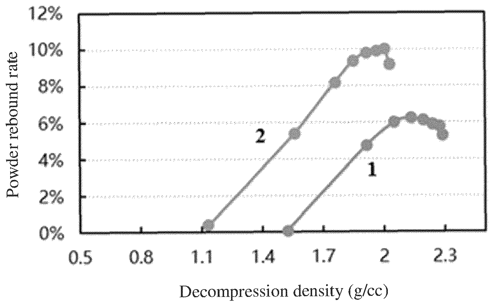

**Claims**

1. A secondary battery, wherein the secondary battery comprises a negative electrode, the negative electrode comprises a current collector and a negative electrode active material layer disposed on a surface of the current collector, the negative electrode active material layer comprises a first negative electrode active material layer and a second negative electrode active material layer, the first negative electrode active material layer is disposed between the current collector and the second negative electrode active material layer, the first negative electrode active material layer comprises a first negative electrode active material, the first negative electrode active material has a maximum rebound rate Ra, the second negative electrode active material layer comprises a second negative electrode active material, and the second negative electrode active material has a maximum rebound rate Rb, wherein $5\% \leq Ra \leq 13\%$, $10\% \leq Rb \leq 17\%$, and Ra < Rb.

2. The secondary battery according to claim 1, wherein 5% ≤ Ra ≤ 10%, and 10% ≤ Rb ≤ 14%.

3. The secondary battery according to claim 1 or 2, wherein 8% ≤ Ra ≤ 10%, and 12% ≤ Rb ≤ 14%.

4. The secondary battery according to claim 2, wherein 0 < Rb - Ra ≤ 10%.

5. The secondary battery according to claim 3, wherein 2% ≤ Rb - Ra ≤ 6%.

6. The secondary battery according to any one of claims 1 to 5, wherein the first negative electrode active material is selected from artificial graphite and/or natural graphite, and the second negative electrode active material is artificial graphite.

7. The secondary battery according to any one of claims 1 to 6, wherein based on a mass of the negative electrode active material layer, the first negative electrode active material layer has a mass percentage of 60% to 80%, and the second negative electrode active material layer has a mass percentage of 20% to 40%.

8. The secondary battery according to any one of claims 1 to 7, wherein based on a mass of the negative electrode active material layer, the first negative electrode active material layer has a mass percentage of 70% to 80%, and the second negative electrode active material layer has a mass percentage of 20% to 30%.

9. The secondary battery according to any one of claims 1 to 8, wherein when tested with N-methyl pyrrolidone as a test oil, the first negative electrode active material has an oil absorption value less than or equal to 65 mL/100g, and the second negative electrode active material has an oil absorption value less than or equal to 65 mL/100g.

10. The secondary battery according to any one of claims 1 to 9, wherein the negative electrode has a compacted density of 1.70 $g/cm^3$ to 1.85 $g/cm^3$.

11. The secondary battery according to any one of claims 1 to 10, wherein the negative electrode plate has a rebound rate T, wherein 15% ≤ T ≤ 20%.

12. An electronic apparatus, comprising the secondary battery according to any one of claims 1 to 11.

13. A method for preparing a negative electrode, wherein the negative electrode comprises a current collector and a negative electrode active material layer disposed on a surface of the current collector, and the negative electrode active material layer comprises a first negative electrode active material layer and a second negative electrode active material layer; the first negative electrode active material layer is disposed between the current collector and the second negative electrode active material layer, the first negative electrode active material layer comprises a first negative electrode active material, and the second negative electrode active material layer comprises a second negative electrode active material; wherein the method comprises:
preparing the first negative electrode active material:

   mixing artificial graphite and/or natural graphite with a coating agent to obtain a first mixture, wherein based on a mass of the first mixture, the coating agent has a mass percentage of 1% to 5%;
   performing, in an inert atmosphere, a first heat treatment on the first mixture to obtain a first heat treatment product; and
   performing, in a mixed gas of $CO_2$ and $N_2$, a second heat treatment on the first heat treatment product to obtain the first negative electrode active material; and
   preparing the second negative electrode active material:

   mixing artificial graphite with a coating agent to obtain a second mixture; and
   performing, in an inert atmosphere, a third heat treatment on the second mixture to obtain the second negative electrode active material; wherein
   the first heat treatment is performed at 950°C to 1200°C, and the first heat treatment lasts for 1 h to 5 h;
   the second heat treatment is performed at 500°C to 900°C, and the second heat treatment lasts for 5 h to 15 h;
   the third heat treatment is performed at 700°C to 1100°C, and the third heat treatment lasts for 4 h to 10 h; and
   the coating agent is asphalt.

14. The method according to claim 13, wherein the second heat treatment is performed at 700°C to 900°C, and the second heat treatment lasts for 5 h to 7 h.

15. The method according to claim 13 or 14, wherein the third heat treatment is performed at 700°C to 900°C, and the third heat treatment lasts for 4 h to 6 h.